# EUROPEAN PATENT APPLICATION

(11) **EP 3 531 164 A1**
(43) Date of publication of application: **28.08.2019**
(21) Application number: 18206033.5
(22) Date of filing: 13.11.2018
(51) Int. Cl.: G01S 13/90, G01S 13/00, G01S 7/40

(54) **PHASE SYNCHRONIZATION METHOD AND DEVICE AND STORAGE MEDIUM**

(30) Priority: 19.03.2018 CN 201810225623
(71) Applicant: Institute of Electronics, Chinese Academy of Sciences, Beijing 100190 (CN)
(72) Inventor: WANG, Yu, Beijing 100190 (CN); LIU, Kaiyu, Beijing 100190 (CN); JIN, Guodong, Beijing 100190 (CN); DENG, Yunkai, Beijing 100190 (CN); JIA, Xiaoxue, Beijing 100190 (CN); LI, Chuang, Beijing 100190 (CN)
(74) Representative: Brevalex

(57) **Abstract**

A phase synchronization method is provided. The phase synchronization method includes: a second Synthetic Aperture Radar (SAR) receives a first phase synchronization signal transmitted by a first SAR to obtain a first receipt signal; the first SAR receives a second phase synchronization signal transmitted by the second SAR to obtain a second receipt signal; a peak phase difference between a peak phase of the first receipt signal and a peak phase of the second receipt signal is determined, and a compensation phase is determined using a first preset rule according to the peak phase difference; and according to the compensation phase, phase compensation is performed on an echo signal received by the second SAR, wherein the echo signal is generated by the radar signal transmitted by the first SAR. A phase synchronization device, a storage medium and an information processing device are also provided.

## Description

### TECHNICAL FIELD

The disclosure relates to a Synthetic Aperture Radar (SAR) technology, and in particular to a phase synchronization method and device.

### BACKGROUND

An SAR is a microwave imaging radar, and it may be mounted on a flying platform such as an aircraft, a satellite or a spacecraft to implement all-time all-weather observation on the ground. Having a certain ground penetration capability, an SAR system has unique advantages in applications to aspects of disaster monitoring, resource exploration, marine monitoring, environmental monitoring, general investigation and yield estimation of crops, surveying and mapping, military reconnaissance and the like, may realize functions difficult for other remote sensing means to realize, and is applied to the fields of civil applications and national defense more and more.

A multi-satellite formation SAR system is an important new-concept radar system, and the system carries radars on multiple satellites flying in a formation to form a multi-static radar system to complete tasks of wide-swath high-resolution imaging, ground elevation measurement, ocean current velocity measurement, ground moving target detection and the like. Multi-satellite formation is implemented in a manner that a primary satellite transmits a signal and multiple secondary satellites simultaneously receive signals. However, since the primary and secondary satellites use different crystal oscillators, thus on one hand, an azimuth phase error introduced by a crystal oscillator frequency error may exist, and is accumulated along with time. On the other hand, as transmitting and receiving phases are unrelated in noise, a low-frequency phase noise component may not be canceled like a single-station condition, and an echo domain phase error generated by phase asynchrony may influence imaging focusing and interferometric phase accuracy, so that phase synchronization is required.

It can be seen from the above that how to implement phase synchronization of an echo signal in the multi-satellite formation SAR system to improve imaging quality is a problem needed to be solved urgently.

### SUMMARY

In view of this, embodiments of the disclosure are intended to provide a phase synchronization method and device, which can implement phase synchronization of the echo signal in the multi-satellite formation SAR system to improve imaging quality.

In order to achieve the purpose, the technical solutions of the disclosure are implemented as follows.

The embodiments of the disclosure provide a phase synchronization method, the method includes: a second SAR receives a first phase synchronization signal transmitted by a first SAR to obtain a first receipt signal; the first SAR receives a second phase synchronization signal transmitted by the second SAR to obtain a second receipt signal; a peak phase difference between a peak phase of the first receipt signal and a peak phase of the second receipt signal is determined, and a compensation phase is determined using a first preset rule according to the peak phase difference; and phase compensation is performed on an echo signal received by the second SAR according to the compensation phase, herein the echo signal is generated from a radar signal transmitted by the first SAR.

In the above solution, the first phase synchronization signal and the second phase synchronization signal are transmitted in free time outside of a period of time of transmitting the radar signal and an echo sampling window of the echo signal; the first receipt signal and the second receipt signal are received in the free time outside of the period of time of transmitting the radar signal and the echo sampling window of the echo signal.

In the above solution, in the free time outside of the period of time of transmitting the radar signal and the echo sampling window of the echo signal, the transmitting of the first phase synchronization signal and the second phase synchronization signal and the receiving of the first receipt signal and the second receipt signal are performed may include: the first SAR transmits the first phase synchronization signal in the free time in first Pulse Recurrence Time (PRT), and the second SAR receives the first receipt signal in the free time in the first PRT; and the second SAR transmits the second phase synchronization signal in the free time in second PRT, and the first SAR receives the second receipt signal in the free time in the second PRT.

In the above solution, the method may further include: maximum values of pulse widths of the first phase synchronization signal and the second phase synchronization signal are determined based on a second preset rule according to duration of the free time for transmitting the first phase synchronization signal and the second phase synchronization signal, and transmission duration of the first phase synchronization signal and the second phase synchronization signal; and minimum values of the pulse widths of the first phase synchronization signal and the second phase synchronization signal are determined based on a third preset rule according to a preset Signal to Noise Ratio (SNR) threshold.

In the above solution, carrier frequencies of the first phase synchronization signal and the second phase synchronization signal are as same as the carrier frequency of the radar signal.

In the above solution, the third preset rule is a corresponding relationship between the preset SNR threshold and the minimum values of the pulse widths.

The embodiments of the disclosure also provide a phase synchronization device, the device includes: an acquiring module, a determining module, and a compensating module; herein, the acquiring module is configured to acquire the first phase synchronization signal which is transmitted by a first Synthetic Aperture Radar (SAR) and received by a second SAR to obtain a first receipt signal and a second phase synchronization signal which is transmitted by the second SAR and received by the first SAR to obtain a second receipt signal; the determining module is configured to determine a peak phase difference between a peak phase of the first receipt signal and a peak phase of the second receipt signal, and determine a compensation phase using a first preset rule according to the peak phase difference; and the compensating module is configured to perform phase compensation on an echo signal received by the second SAR according to the compensation phase, herein the echo signal is generated from a radar signal transmitted by the first SAR.

In the above solution, the acquiring module is specifically configured to transmit the first phase synchronization signal and the second phase synchronization signal in free time outside of a period of time of transmitting the radar signal and an echo sampling window of the echo signal; and receive the first receipt signal and the second receipt signal in the free time outside of the period of time of transmitting the radar signal and the echo sampling window of the echo signal.

In the above solution, the first receipt signal is the first phase synchronization signal which is transmitted by the first SAR in the free time in the first PRT and received by the second SAR in the free time in the first PRT; the second receipt signal is the second phase synchronization signal which is transmitted by the second SAR in the free time in the second PRT and received by the first SAR in the free time in the second PRT.

In the above solution, the device further includes: a setting module, which is configured to: determine maximum values of pulse widths of the first phase synchronization signal and the second phase synchronization signal based on the second preset rule according to duration of the free time for transmitting the first phase synchronization signal and the second phase synchronization signal, and the transmission duration of the first phase synchronization signal and the second phase synchronization signal; and determine minimum values of the pulse widths of the first phase synchronization signal and the second phase synchronization signal based on the third preset rule according to the preset SNR threshold.

In the above solution, carrier frequencies of the first phase synchronization signal and the second phase synchronization signal are as same as the carrier frequency of the radar signal.

In the above solution, the third preset rule is a corresponding relationship between the preset SNR threshold and the minimum values of the pulse widths.

The embodiments of the disclosure also provide a storage medium storing an executable program which, when executed by a processor, implements steps of any above phase synchronization method.

The embodiments of the disclosure also provide an information processing device including a processor, a memory, and an executable program which is stored on the memory and may be executed by the processor. The executable program, when executed by the processor, implements steps of any above phase synchronization method.

According to the phase synchronization method and device provided by the embodiments of the disclosure, a second SAR receives a first phase synchronization signal transmitted by a first SAR to obtain a first receipt signal; the first SAR receives a second phase synchronization signal transmitted by the second SAR to obtain a second receipt signal; a peak phase difference between a peak phase of the first receipt signal and a peak phase of the second receipt signal is determined, and a compensation phase is determined using a first preset rule according to the peak phase difference; and phase compensation is performed on an echo signal received by the second SAR according to the compensation phase, wherein the echo signal is generated from a radar signal transmitted by the first SAR. Therefore, phase synchronization of the echo signal in the multi-satellite formation SAR system may be implemented to improve imaging quality.

### BRIEF DESCRIPTION OF DRAWINGS

FIG. 1 is a flowchart of a phase synchronization method according to an embodiment of the disclosure.
FIG. 2 is a schematic diagram of a time sequence of transmitting and receiving a phase synchronization signal in the multi-satellite formation SAR system according to an embodiment of the disclosure.
FIG. 3 is a structure diagram of a synchronization system of primary satellite and secondary satellite in the multi-satellite formation SAR system according to an embodiment of the disclosure.
FIG. 4 is a flowchart of performing phase synchronization in the multi-satellite formation SAR system according to an embodiment of the disclosure.
FIG. 5 is a flowchart of determining a compensation phase in the multi-satellite formation SAR system according to an embodiment of the disclosure.
FIG. 6 is a structure diagram of a phase synchronization device according to an embodiment of the disclosure.

### DETAILED DESCRIPTION

In the embodiments of the disclosure, a second SAR receives a first phase synchronization signal transmitted by a first SAR to obtain a first receipt signal; the first SAR receives a second phase synchronization signal transmitted by the second SAR to obtain a second receipt signal; a peak phase difference between a peak phase of the first receipt signal and a peak phase of the second receipt signal is determined, and a compensation phase is determined using a first preset rule according to the peak phase difference; and phase compensation is performed on an echo signal received by the second SAR according to the compensation phase, the echo signal is generated from a radar signal transmitted by the first SAR.

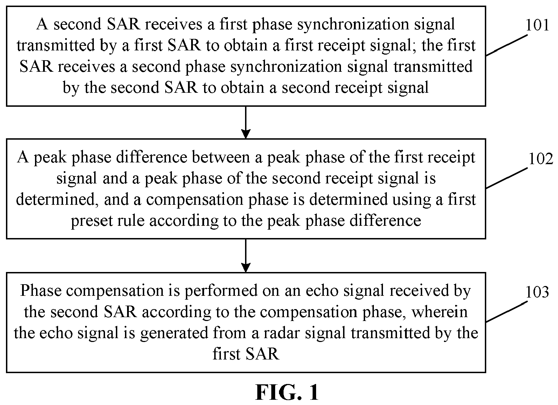

As shown in FIG. 1, a phase synchronization method provided by the embodiments of the disclosure includes the following steps.

At S101, a second SAR receives a first phase synchronization signal transmitted by a first SAR to obtain a first receipt signal; the first SAR receives a second phase synchronization signal transmitted by the second SAR to obtain a second receipt signal.

Generally, the multi-satellite formation SAR system mainly has two working modes. The first working mode is that one satellite-borne SAR transmits a radar signal, and more than one other satellite-borne SAR receives an echo signal of the radar signal. The first working mode is called a two-station mode. The satellite transmitting the radar signal is called a primary satellite, and the satellite receiving the echo signal of the radar signal is called a secondary satellite. The second working mode is that all the satellite-borne SARs work independently, that is to say, all the satellite-borne SARs transmit the radar signals separately, and receive the echo signals of the radar signals of other SARs. The second working mode is called a catch-up single-station mode. In the two-station working mode, it is only needed to perform phase synchronization compensation on the echo signal received by the secondary satellite. In the catch-up single-station mode, it is needed to perform phase synchronization compensation on the echo signals received by each of the satellites.

Here, in the two-station mode, the first SAR may be the satellite-borne SAR of the primary satellite transmitting the radar signal in the multi-satellite formation SAR system, and the second SAR may be the satellite-borne SAR of any secondary satellite receiving the radar signal in the satellite-borne SAR system. In the two-station mode, there are usually more than two secondary satellites, and each secondary satellite is equivalent to a second SAR. In the catch-up mode, the first SAR may be any satellite-borne SAR transmitting the radar signal, and the second SAR may be any satellite-borne SAR receiving the echo signal of the radar signal.

Specifically, the first SAR may directly transmit the first phase synchronization signal to the second SAR, and the first phase synchronization signal is received by the second SAR. Since the first SAR and the second SAR use different crystal oscillators, an azimuth phase error introduced by a crystal oscillator frequency error may exist, and a phase error may be generated between the first receipt signal received by the second SAR and the first phase synchronization signal. After receiving the first receipt signal, the second SAR directly transmits the second phase synchronization signal to the first SAR, and the second phase synchronization signal is received by the first SAR. Since the second SAR and the first SAR use different crystal oscillators, the azimuth phase error introduced by the crystal oscillator frequency error may exist, and a phase error may be generated between the second receipt signal received by the first SAR and the second phase synchronization signal. The first phase synchronization signal and the second phase synchronization signal may be linear frequency modulation signals.

The first receipt signal and the second receipt signal may be either acquired by the primary satellite or the secondary satellite for subsequent processing, or acquired by a ground station for subsequent processing.

Furthermore, the first phase synchronization signal and the second phase synchronization signal are transmitted in free time outside of a period of time of transmitting the radar signal and an echo sampling window of the echo signal; and the first receipt signal and the second receipt signal are received in the free time outside of the period of time of transmitting the radar signal and the echo sampling window of the echo signal.

Here, the first SAR and the second SAR may transmit the first phase synchronization signal and the second phase synchronization signal and receive the first receipt signal and the second receipt signal in the free time outside of the period of time of transmitting the radar signal and receiving the echo signal. In such a manner, interruption of normal working of the radar caused by phase synchronization processing may be prevented, thereby improving the working efficiency of the radar.

Furthermore, the first SAR transmits the first phase synchronization signal in the free time in first PRT, and the second SAR receives the first receipt signal in the free time in the first PRT. The second SAR transmits the second phase synchronization signal in the free time in second PRT, and the first SAR receives the second receipt signal in the free time in the second PRT.

Specifically, there are usually two pieces of free time in one piece of PRT, one of which is the free time between the time of transmitting the radar signal and an echo receiving window, and the other is the free time between the time after the echo receiving window and the end time of this PRT. The transmitting and receiving of the phase synchronization signal may be completed once in the selected free time in two pieces of PRT.

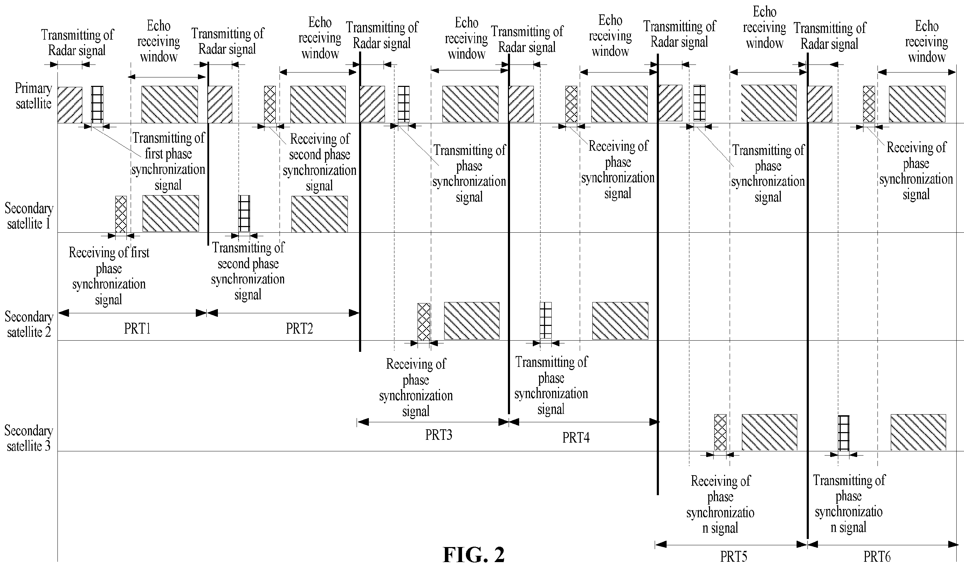

As shown in FIG. 2, in the multi-satellite formation SAR system composed of one primary satellite and three secondary satellites, the primary satellite and the secondary satellites perform the transmitting and receiving of the phase synchronization signal in the free time between the time of transmitting the radar signal and the echo receiving window in two pieces of PRT. In the PRT1, the primary satellite transmits the first phase synchronization signal to the secondary satellite 1 in the free time, and the secondary satellite 1 completes the receiving of the first phase synchronization signal in the free time. Due to the crystal oscillator frequency error of the primary satellite and the secondary satellite 1, the phase error may be generated between the signal received by the secondary satellite 1 and the first phase synchronization signal, the received signal is the first receipt signal. In the PRT2, the secondary satellite 1 transmits the second phase synchronization signal to the primary satellite in the free time, and the primary satellite receives the second phase synchronization signal in the free time. Due to the crystal oscillator frequency error of the primary satellite and the secondary satellite 1, the phase error may be generated between the signal received by the primary satellite and the second phase synchronization signal, the received signal is the second receipt signal. Here, both the transmitting and receiving of the phase synchronization signal are performed in the free time between the time of transmitting the radar signal and the echo receiving window, or may also be performed in the free time between the time after the echo receiving window and the end time of this PRT. In each subsequent PRT, the primary satellite performs the transmitting and receiving of the phase synchronization signal with the secondary satellite 2 and the secondary satellite 3 in the same way as the secondary satellite 1, so it will not be repeated here.

Furthermore, according to the duration of the free time for transmitting the first phase synchronization signal and the second phase synchronization signal, and the transmission duration of the first phase synchronization signal and the second phase synchronization signal, the maximum values of the pulse widths of the first phase synchronization signal and the second phase synchronization signal are determined based on a second preset rule; and according to a preset SNR threshold, the minimum value of the pulse width of the first phase synchronization signal and the second phase synchronization signal are determined based on a third preset rule.

Here, the pulse width is the duration of the first phase synchronization signal or the second phase synchronization signal. A necessary condition that a piece of free time may be used for the transmitting and receiving of the phase synchronization signal is that: the duration of the free time is not less than two pulse widths of the phase synchronization signal plus the transmission duration of the phase synchronization signal in space. So, the second preset rule may be set according to the principle, that is, the necessary condition that a piece of free time can be used to transmit and receive the phase synchronization signal may be that when the free time is fixed, the maximum value of the pulse width may be equal to a half of the difference between the duration of the free time and the transmission duration of the synchronization signal.

The preset SNR threshold is the SNR threshold that an effective signal may be identified by a phase synchronization signal receiving end. Generally, the greater the pulse width of the signal, the higher the energy of the effective signal, and the greater the SNR; so, the phase synchronization signal receiving end may identify the effective signal in the phase synchronization signal only when the pulse width achieves a certain length. In such a manner, the minimum value of the pulse width may be determined according to the preset SNR threshold. The third preset rule may be a corresponding relationship between the preset SNR threshold and the minimum value of the pulse width; different preset SNR thresholds correspond to different minimum values of the pulse width. The third preset rule may also set some redundancies, so as to ensure that the minimum value of the pulse width may be identified by the phase synchronization signal receiving end.

Specifically, by taking that the pulse width of the first phase synchronization signal is determined for example, the free time in a piece of PRT is usually determined by the radar signal, that is, after the radar signal is determined, the free time in each PRT is determined. By taking that the transmitting and receiving of the synchronization signal are performed once in two pieces of adjacent PRT respectively for example, the above-mentioned two pieces of free time which are called first free duration and second free duration are in each PRT. A maximum value of the first free duration and the second free duration in the former PRT of the two pieces of adjacent PRT is determined to be a first threshold; the maximum value of the first free duration and the second free duration in the latter PRT of the two pieces of adjacent PRT is determined to be a second threshold; a minimum value of the first threshold and the second threshold is determined to be a third threshold; and the transmission duration of the first phase synchronization signal is determined according to a distance between the first SAR and the second SAR.

The maximum value of the pulse width is determined according to the third threshold and the transmission duration of the first phase synchronization signal; the minimum value of the pulse width is determined according to a preset SNR of the phase synchronization signal; and the pulse width of the first phase synchronization signal is determined according to the maximum value and minimum value of the pulse width.

The pulse width of the first phase synchronization signal may be determined according to the maximum value and minimum value of the pulse widths in multiple implementation manners; for example, an intermediate value between the minimum value and the maximum value may be determined to be the pulse width, and a numerical value between the minimum value and the maximum value may also be randomly selected and determined to be the pulse width. Of course, the numerical value, input by an operator, between the minimum and maximum value may also be determined to be the pulse width.

Furthermore, carrier frequencies of the first phase synchronization signal and the second phase synchronization signal are as same as the carrier frequency of the radar signal.

Each phase synchronization signal in the SAR system is the linear frequency modulation signal, and the carrier frequency of each phase synchronization signal is as same as the carrier frequency of the radar signal. So, during system design, the setting of a transceiver of the phase synchronization signal may be simplified, thereby reducing complexity in system design. In the meanwhile, since the carrier frequency of each phase synchronization signal is as same as the carrier frequency of the radar signal, the phase compensation is performed without transforming the synchronization data in proportion to a radar frequency, thereby making a compensation result more accurate.

Furthermore, the first phase synchronization signal and the second phase synchronization signal are the same signal; so, calculation of the pulse widths of the first phase synchronization signal and the second phase synchronization signal may be performed more conveniently, thereby simplifying calculation work.

After the above steps are completed, time points of transmitting and receiving the first phase synchronization signal and the second phase synchronization signal are determined, namely the free time based on the transmitting and receiving of the radar signal; the pulse width and the carrier frequencies of the first phase synchronization signal and the second phase synchronization signal are determined; so, the first phase synchronization signal and the second phase synchronization signal are determined completely.

At S102, a peak phase difference between a peak phase of the first receipt signal and a peak phase of the second receipt signal is determined, and compensation phase is determined using the first preset rule according to the peak phase difference.

Here, the peak phase difference between the peak phase of the first receipt signal and the peak phase of the second receipt signal may be determined by the primary satellite, the secondary satellite or the ground station which acquires the first receipt signal and the second receipt signal; and the compensation phase is determined using the preset rule according to the peak phase difference. The first preset rule may be determined according to the first phase synchronization signal and the second phase synchronization signal. When the carrier frequencies of the first phase synchronization signal and the second phase synchronization signal are different from the carrier frequency of the radar signal, frequency conversion is required.

Furthermore, pulse compression is performed on the first receipt signal and the second receipt signal respectively, and peak phases corresponding to the first receipt signal and the second receipt signal are acquired; subtraction is performed on the peak phases corresponding to the first receipt signal and the second receipt signal to obtain the peak phase difference; and a half of the peak phase difference is determined to be the compensation phase.

Here, the pulse compression may be performed on the first receipt signal and the second receipt signal respectively; the peak phases of the first receipt signal and the second receipt signal are extracted from results of performing the pulse compression on the first receipt signal and the second receipt signal respectively; and the difference between the two peak phases is determined, namely the peak phase difference.

The first receipt signal and the second receipt signal respectively go through a process of transmitting and receiving and acquiring signal, and the phase errors may be exist respectively in the process of transmitting and receiving, so a half of the peak phase difference may be determined to be the compensation phase when the first phase synchronization signal and the second phase synchronization signal with the same carrier frequency as the radar signal are adopted.

In practical applications, in the satellite-borne SAR in the two-station mode, the compensation phase corresponding to each secondary satellite may be determined; in the satellite-borne SAR in the catch-up mode, the compensation phase may be determined for two satellite-borne SARs transmitting and receiving the radar signal with each other.

At S103, according to the compensation phase, the phase compensation is performed on the echo signal received by the second SAR, herein the echo signal is generated by the radar signal transmitted by the first SAR.

Here, in the satellite-borne SAR in the two-station mode, the primary satellite only transmits the radar signal, so the phase compensation may be performed on the echo signal received by each secondary satellite according to the compensation phase; in the satellite-borne SAR in the catch-up mode, each satellite receives the echo signal, and the phase compensation may be performed on the echo signal according to the compensation phase corresponding to the radar signal.

The phase compensation may be performed in the satellite of the satellite-borne SAR or in the ground station.

Positive effectives created by the disclosure are described in detail below in combination with the specific examples.

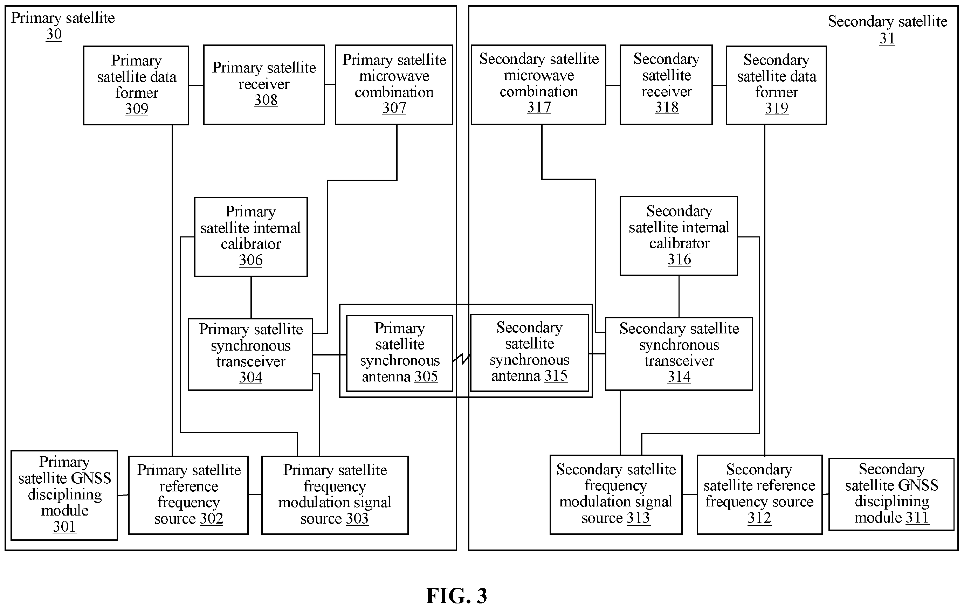

The embodiments of the disclosure first provide a phase synchronization method to be applied to the multi-satellite formation SAR system. As shown in FIG. 3, the multi-satellite formation SAR system includes the primary satellite 30 and the secondary satellite 31; there may be multiple secondary satellites 31. The primary satellite 30 is configured to transmit the radar signal; the secondary satellite 31 is configured to receive the echo signal of the radar signal. The primary satellite 30 includes: a primary satellite Global Navigation Satellite System (GNSS) disciplining module 301, a primary satellite reference frequency source 302, a primary satellite frequency modulation signal source 303, a primary satellite synchronous transceiver 304, a primary satellite synchronous antenna 305, a primary satellite internal calibrator 306, a primary satellite microwave combination 307, a primary satellite receiver 308 and a primary satellite data former 309. The secondary satellite 31 includes: a secondary satellite GNSS disciplining module 311, a secondary satellite reference frequency source 312, a secondary satellite frequency modulation signal source 313, a secondary satellite synchronous transceiver 314, a secondary satellite synchronous antenna 315, a secondary satellite internal calibrator 316, a secondary satellite microwave combination 317, a secondary satellite receiver 318 and a secondary satellite data former 319.

The primary GNSS disciplining module 301 is configured to provide a time frequency signal for the primary satellite reference frequency source 302.

The primary satellite reference frequency source 302 is configured to generate multiple working frequency signals for provision for the primary satellite frequency modulation signal source 303 by taking a frequency provided by the primary satellite GNSS disciplining module 301 as a reference.

The primary satellite frequency modulation signal source 303 is configured to provide the linear frequency modulation signal for the primary satellite synchronous transceiver 304 and the primary satellite internal calibrator 306.

The primary satellite synchronous transceiver 304 is configured to transmit or receive the phase synchronization signal to or from the secondary satellite 31 through the primary satellite synchronous antenna 305.

The primary satellite synchronous antenna 305 is configured to transmit or receive the phase synchronization signal to or from the secondary satellite 31.

The primary satellite internal calibrator 306 and the secondary satellite internal calibrator 316 are configured to calibrate signals transmitted by the synchronous transceiver of the primary satellite 30 or secondary satellite 31.

The primary satellite microwave combination 307 is configured to receive the phase synchronization signal transmitted by the primary satellite synchronous transceiver 304, and transmit a signal to the primary satellite synchronous transceiver 304.

The primary satellite receiver 308 is configured to receive the signal transmitted by the primary satellite microwave combination 307, and transmit the signal to the primary satellite data former 309.

The primary satellite data former 309 is configured to perform data processing on the received signal.

The secondary satellite GNSS disciplining module 311 is configured to provide a time frequency signal for the secondary satellite reference frequency source 312.

The secondary reference frequency source 312 is configured to generate multiple working frequency signals for provision for the secondary satellite frequency modulation signal source 313 by taking a frequency provided by the secondary satellite GNSS disciplining module 311 as a reference.

The secondary satellite frequency modulation signal source 313 is configured to provide the linear frequency modulation signal for the secondary satellite synchronous transceiver 314 and the secondary satellite internal calibrator 316.

The secondary satellite synchronous transceiver 314 is configured to transmit or receive the phase synchronization signal to or from the primary satellite 30 through the secondary satellite synchronous antenna 315.

The secondary satellite synchronous antenna 315 is configured to transmit or receive the phase synchronization signal to or from the primary satellite 30.

The secondary satellite microwave combination 317 is configured to receive the phase synchronization signal transmitted by the secondary satellite synchronous transceiver 314, and transmit a signal to the secondary satellite synchronous transceiver 314.

The secondary satellite receiver 318 is configured to receive the signal transmitted by the secondary satellite microwave combination 317, and transmit the signal to the secondary satellite data former 319.

The secondary satellite data former 319 is configured to perform data processing on the received signal.

Reference frequency sources of the primary satellite 30 and secondary satellite 31 may use a GNSS disciplining crystal oscillator, so that a radar frequency offset of the two satellites may be reduced as much as possible, sampling in a phase error data acquisition process meets the Nyquist theorem, complexity in phase synchronization error extraction and compensation may further be simplified, and phase synchronization reliability is improved.

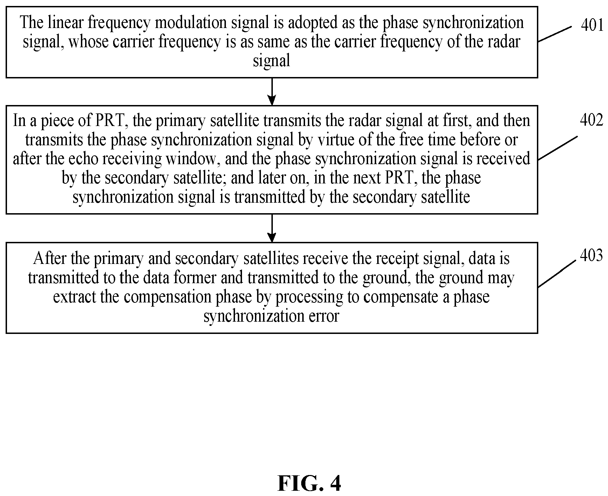

FIG. 4 shows specific implementation steps of performing phase synchronization in the multi-satellite formation SAR system.

At S401, the linear frequency modulation signal is adopted as the phase synchronization signal, whose carrier frequency is as same as the carrier frequency of the radar signal.

At S402, in a piece of PRT, the primary satellite transmits the radar signal at first, and then transmits the phase synchronization signal by virtue of the free time before or after the echo receiving window, and the phase synchronization signal is received by the secondary satellite; and later on, in the next PRT, the phase synchronization signal is transmitted by the secondary satellite in the free time before or after the echo receiving window, wherein the echo receiving window is after the primary satellite transmits the radar signal; and the phase synchronization signal is received by the secondary satellite.

A time sequence diagram of transmitting and receiving the signal by the primary satellite and three secondary satellites may be as shown in FIG. 2. In the PRT1, the primary satellite transmits the radar signal in a radar signal transmitting window at first, herein duration of the radar signal transmitting window is the pulse width of the radar signal plus protection time; then, the primary satellite transmits the first phase synchronization signal to the secondary satellite 1 by virtue of the free time before or after the echo receiving window, and then the secondary satellite receives the first phase synchronization signal of the primary satellite as the first receipt signal. In the PRT2, the secondary satellite 1 transmits the second phase synchronization signal to the primary satellite by virtue of the free time between transmitting and receiving the radar signal, so that pulse mutual transmission between the primary satellite and the secondary satellite 1 is implemented; and the primary satellite receives the second phase synchronization signal as the second receipt signal. The manner of the pulse mutual transmission between the primary satellite and the secondary satellite 2 and between the primary satellite and the secondary satellite 3 are as same as the manner of the pulse mutual transmission between the primary satellite and the secondary satellite 1, so it will not be repeated here.

It may also be as follows: the primary satellite transmits the radar signal at first, and then the secondary satellite transmits the phase synchronization signal for the primary satellite to receive by virtue of the free time before or after the echo receiving window; and later on, in the next PRT, the primary satellite transmits the phase synchronization signal for the secondary satellite to receive by virtue of the free time before or after the echo receiving window.

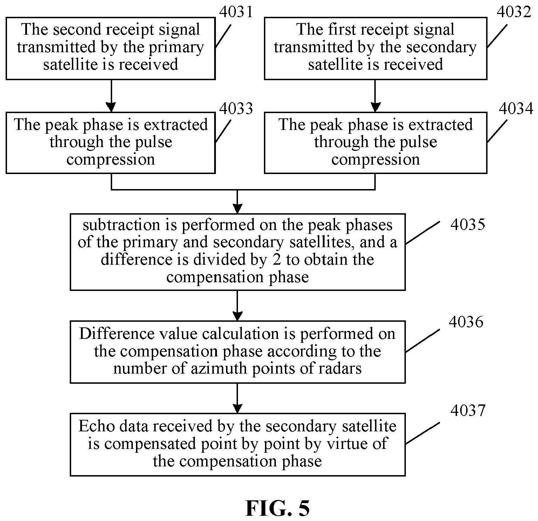

At S403, after the primary and secondary satellites receive the receipt signal, data is transmitted to the ground, and the ground may extract a compensation phase by processing to compensate a phase synchronization error. The specific implementation steps are shown in FIG. 5.

At S4031, the second receipt signal transmitted by the primary satellite is received.

At S4032, the first receipt signal transmitted by the secondary satellite is received.

At S4033, the pulse compression is performed on the second receipt signal transmitted by the primary satellite, and the peak phase is extracted.

At S4034, the pulse compression is performed on the first receipt signal transmitted by the secondary satellite, and the peak phase is extracted.

At S4035, subtraction is performed on the peak phases of the primary and secondary satellites, and a difference is divided by 2 to obtain the compensation phase.

At S4036, difference value calculation is performed on the compensation phase according to the number of azimuth points of radars.

At S4037, echo data received by the secondary satellite is compensated point by point by virtue of the compensation phase.

Here, there is no sequence for S4031 and S4032, that is, execution sequences of the two steps may be exchanged, or the two steps may be executed at the same time; in the meanwhile, there is no sequence for S4033 and S4034, that is, execution sequences of the two steps may be exchanged, or the two steps may be executed at the same time.

In the embodiments of the disclosure, the transmitting of each phase synchronization signal is between two adjacent time points of transmitting the radar signal; in such a manner, interruption of normal working of the radar may be prevented, thereby improving the working efficiency of the radar.

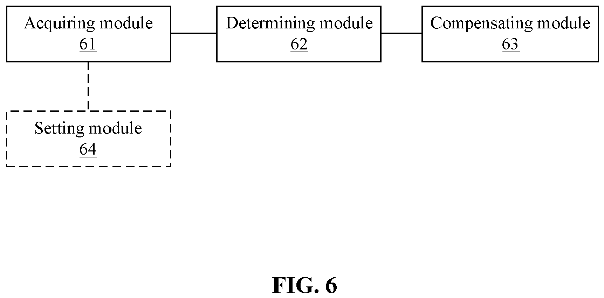

As shown in FIG. 6, the phase synchronization device provided by the embodiments of the disclosure includes: an acquiring module 61, a determining module 62, and a compensating module 63.

The acquiring module 61 is configured to acquire the first phase synchronization signal which is transmitted by the first SAR and received by the second SAR to obtain the first receipt signal; and the second phase synchronization signal which is transmitted by the second SAR and received by the first SAR to obtain the second receipt signal.

Generally, the multi-satellite formation SAR system mainly has two working modes. The first working mode is that one satellite-borne SAR transmits the radar signal, and more than one other satellite-borne SAR receives the echo signal of the radar signal. The first working mode is called a two-station mode. The satellite transmitting the radar signal is called the primary satellite, and the satellite receiving the echo signal of the radar signal is called the secondary satellite. The second working mode is that all the satellite-borne SARs work independently, that is to say, all the satellite-borne SARs transmit the radar signals separately, and receive the echo signals of the radar signals of other SARs. The second working mode is called the catch-up single-station mode. In the two-station working mode, it is only needed to perform the phase synchronization compensation on the echo signal received by the secondary satellite. In the catch-up single-station mode, it is needed to perform the phase synchronization compensation on the echo signals received by each of the satellites.

Here, in the two-station mode, the first SAR may be the satellite-borne SAR of the primary satellite transmitting the radar signal in the multi-satellite formation SAR system, and the second SAR may be the satellite-borne SAR of any secondary satellite receiving the radar signal in the satellite-borne SAR system. In the two-station mode, there are usually more than two secondary satellites, and each secondary satellite is equivalent to a second SAR. In the catch-up mode, the first SAR may be any satellite-borne SAR transmitting the radar signal, and the second SAR may be any satellite-borne SAR receiving the echo signal of the radar signal.

Specifically, the first SAR may directly transmit the first phase synchronization signal to the second SAR, and the first phase synchronization signal is received by the second SAR. Since the first SAR and the second SAR use different crystal oscillators, the azimuth phase error introduced by the crystal oscillator frequency error may exist, and a phase error may be generated between the first receipt signal received by the second SAR and the first phase synchronization signal. After receiving the first receipt signal, the second SAR directly transmits the second phase synchronization signal to the first SAR, and the second phase synchronization signal is received by the first SAR. Since the second SAR and the first SAR use different crystal oscillators, the azimuth phase error introduced by the crystal oscillator frequency error may exist, and a phase error may be generated between the second receipt signal received by the first SAR and the second phase synchronization signal. The first phase synchronization signal and the second phase synchronization signal may be the linear frequency modulation signals.

The first receipt signal and the second receipt signal may be either acquired by the primary satellite or the secondary satellite for subsequent processing, or acquired by the ground station for subsequent processing.

Furthermore, the first phase synchronization signal and the second phase synchronization signal are transmitted in the free time outside of the period of time of transmitting the radar signal and the echo sampling window of the echo signal; and the first receipt signal and the second receipt signal are received in the free time outside of the period of time of transmitting the radar signal and the echo sampling window of the echo signal.

Here, the first SAR and the second SAR may transmit the first phase synchronization signal and the second phase synchronization signal and receive the first receipt signal and the second receipt signal in the free time outside of the period of time of transmitting the radar signal and receiving the echo signal. In such a manner, interruption of normal working of the radar caused by the phase synchronization processing may be prevented, thereby improving the working efficiency of the radar.

Furthermore, the first SAR transmits the first phase synchronization signal in the free time in first PRT, and the second SAR receives the first receipt signal in the free time in the second PRT. The second SAR transmits the second phase synchronization signal in the free time in second PRT, and the first SAR receives the second receipt signal in the free time in the second PRT.

Specifically, there are usually two pieces of free time in one piece of PRT, one of which is the free time between the time of transmitting the radar signal and the echo receiving window, and the other is the free time between the time after the echo receiving window and the end time of this PRT. The transmitting and receiving of the phase synchronization signal may be completed once in the selected free time in two pieces of PRT.

As shown in FIG. 2, in the multi-satellite formation SAR system composed of one primary satellite and three secondary satellites, the primary satellite and the secondary satellites perform the transmitting and receiving of the phase synchronization signal in the free time between the time of transmitting the radar signal and the echo receiving window in two pieces of PRT. In the PRT1, the primary satellite transmits the first phase synchronization signal to the secondary satellite 1 in the free time, and the secondary satellite 1 completes the receiving of the first phase synchronization signal in the free time. Due to the crystal oscillator frequency error of the primary satellite and the secondary satellite 1, a phase error may be generated between the signal received by the secondary satellite 1 and the first phase synchronization signal, the received signal is the first receipt signal. In the PRT2, the secondary satellite 1 transmits the second phase synchronization signal to the primary satellite in the free time, and the primary satellite receives the second phase synchronization signal in the free time. Due to the crystal oscillator frequency error of the primary satellite and the secondary satellite 1, a phase error may be generated between the signal received by the primary satellite and the second phase synchronization signal, the received signal is the second receipt signal. Here, both the transmitting and receiving of the phase synchronization signal are performed in the free time between the time of transmitting the radar signal and the echo receiving window, or may also be performed in the free time between the time after the echo receiving window and the end time of this PRT. In each subsequent PRT, the primary satellite performs the transmitting and receiving of the phase synchronization signal with the secondary satellite 2 and the secondary satellite 3 in the same way as the secondary satellite 1, so it will not be repeated here.

Furthermore, the device further includes a setting module 64, which is configured to, according to the duration of the free time for transmitting the first phase synchronization signal and the second phase synchronization signal, and the transmission duration of the first phase synchronization signal and the second phase synchronization signal, determine the maximum values of the pulse widths of the first phase synchronization signal and the second phase synchronization signal based on the second preset rule, and according to the preset SNR threshold, determine the minimum values of the pulse widths of the first phase synchronization signal and the second phase synchronization signal based on the third preset rule.

Here, the pulse width is the duration of the first phase synchronization signal or the second phase synchronization signal. The necessary condition that a piece of free time may be used for the transmitting and receiving of the phase synchronization signal is that: the duration of the free time is not less than two pulse widths of the phase synchronization signal plus the transmission duration of the phase synchronization signal in space. So, the second preset rule may be set according to the principle, that is, the necessary condition that a piece of free time must meet the condition of transmitting and receiving the phase synchronization signal may be that when the free time is fixed, the maximum value of the pulse width may be equal to a half of the difference between the duration of the free time and the transmission duration of the synchronization signal.

The preset SNR threshold is the SNR threshold that the effective signal may be identified by the phase synchronization signal receiving end. Generally, the greater the pulse width of the signal, the higher the energy of the effective signal, and the greater the SNR; so, the phase synchronization signal receiving end may identify the effective signal in the phase synchronization signal only when the pulse width achieves a certain length. In such a manner, the minimum value of the pulse width may be determined according to the preset SNR threshold. The third preset rule may be the corresponding relationship between the preset SNR threshold and the minimum value of the pulse width; the different preset SNR thresholds correspond to the different minimum values of the pulse width. The third preset rule may also set some redundancies, so as to ensure that the minimum value of the pulse width may be identified by the phase synchronization signal receiving end.

Specifically, by taking that the pulse width of the first phase synchronization signal is determined for example, the free time in a piece of PRT is usually determined by the radar signal, that is, after the radar signal is determined, the free time in each PRT is determined. By taking that the transmitting and receiving of the synchronization signal are performed once in two pieces of adjacent PRT respectively for example, the above-mentioned two pieces of free time which are called the first free duration and the second free duration are in each PRT. The maximum value of the first free duration and the second free duration in the former PRT of the two pieces of adjacent PRT is determined to be the first threshold; the maximum value of the first free duration and the second free duration in the latter PRT of the two pieces of adjacent PRT is determined to be the second threshold; the minimum value of the first threshold and the second threshold is determined to be the third threshold; and the transmission duration of the first phase synchronization signal is determined according to the distance between the first SAR and the second SAR.

The maximum value of the pulse width is determined according to the third threshold and the transmission duration of the first phase synchronization signal; the minimum value of the pulse width is determined according to the preset SNR of the phase synchronization signal; and the pulse width of the first phase synchronization signal is determined according to the maximum value and minimum value of the pulse width.

The pulse width of the first phase synchronization signal may be determined according to the maximum value and minimum value of the pulse widths in multiple implementation manners; for example, intermediate values between the minimum value and the maximum value may be determined to be the pulse width, and a numerical value between the minimum value and the maximum value may also be randomly selected and determined to be the pulse width. Of course, the numerical value, input by the operator, between the minimum and maximum value may also be determined to be the pulse width.

Furthermore, carrier frequencies of the first phase synchronization signal and the second phase synchronization signal are as same as the carrier frequency of the radar signal.

Each phase synchronization signal in the SAR system is the linear frequency modulation signal, and the carrier frequency of each phase synchronization signal is as same as the carrier frequency of the radar signal. So, during the system design, the setting of the transceiver of the phase synchronization signal may be simplified, thereby reducing complexity in the system design. In the meanwhile, since the carrier frequency of each phase synchronization signal is as same as the carrier frequency of the radar signal, the phase compensation is performed without transforming the synchronization data in proportion to the radar frequency, thereby making the compensation result more accurate.

Furthermore, the first phase synchronization signal and the second phase synchronization signal are the same signal; so, the calculation of the pulse widths of the first phase synchronization signal and the second phase synchronization signal may be performed more conveniently, thereby simplifying the calculation work.

After the above steps are completed, time points of transmitting and receiving the first phase synchronization signal and the second phase synchronization signal are determined, namely the free time based on the transmitting and receiving of the radar signal; the pulse width and the carrier frequencies of the first phase synchronization signal and the second phase synchronization signal are determined; so, the first phase synchronization signal and the second phase synchronization signal are determined completely.

The determining module 62 is configured to determine a peak phase difference between a peak phase of the first receipt signal and a peak phase of the second receipt signal, and determine the compensation phase using the first preset rule according to the peak phase difference.

Here, the peak phase difference between the peak phase of the first receipt signal and the peak phase of the second receipt signal may be determined by the primary satellite, the secondary satellite or the ground station which acquires the first receipt signal and the second receipt signal; and the compensation phase is determined using the preset rule according to the peak phase difference. The first preset rule may be determined according to the first phase synchronization signal and the second phase synchronization signal. When the carrier frequencies of the first phase synchronization signal and the second phase synchronization signal are different from the carrier frequency of the radar signal, the frequency conversion is required.

Furthermore, the pulse compression is performed on the first receipt signal and the second receipt signal respectively, and the peak phases corresponding to the first receipt signal and the second receipt signal are acquired; the subtraction is performed on the peak phases corresponding to the first receipt signal and the second receipt signal to obtain the peak phase difference; and a half of the peak phase difference is determined to be the compensation phase.

Here, the pulse compression may be performed on the first receipt signal and the second receipt signal respectively; the peak phases of the first receipt signal and the second receipt signal are extracted from the results of performing the pulse compression on the first receipt signal and the second receipt signal respectively; and the difference between the two peak phases is determined, namely the peak phase difference.

The first receipt signal and the second receipt signal respectively go through a process of transmitting and receiving and acquiring signal, and the phase errors may be exist respectively in the process of transmitting and receiving, so a half of the peak phase difference may be determined to be the compensation phase when the first phase synchronization signal and the second phase synchronization signal with the same carrier frequency as the radar signal are adopted.

In practical applications, in the satellite-borne SAR in the two-station mode, the compensation phase corresponding to each secondary satellite may be determined; in the satellite-borne SAR in the catch-up mode, the compensation phase may be determined for the two satellite-borne SARs transmitting and receiving the radar signal with each other.

The compensating module 63 is configured to, according to the compensation phase, perform the phase compensation on the echo signal received by the second SAR, herein, the echo signal is generated by the radar signal transmitted by the first SAR.

Here, in the satellite-borne SAR in the two-station mode, the primary satellite only transmits the radar signal, so the phase compensation may be performed on the echo signal received by each secondary satellite according to the compensation phase; in the satellite-borne SAR in the catch-up mode, each satellite receives the echo signal, and the phase compensation may be performed on the echo signal according to the compensation phase corresponding to the radar signal.

The phase compensation may be performed in the satellite of the satellite-borne SAR or in the ground station.

In practical applications, all of the acquiring module 61, the determining module 62, the compensating module 63 and the setting module 64 may be realized by a Central Processing Unit (CPU), a Micro Controller Unit (MCU), a Digital Signal Processor (DSP) or a Field Programmable Gate Array (FPGA) in the satellite-borne SAR or a ground server.

The embodiments of the disclosure also provide a storage medium, on which an executable program is stored. When executed by the processor, the executable program implements the steps of the phase synchronization method. As shown in FIG. 1, the phase synchronization method includes the following steps.

At S101, a second SAR receives the first phase synchronization signal transmitted by the first SAR to obtain the first receipt signal; the first SAR receives the second phase synchronization signal transmitted by the second SAR to obtain the second receipt signal.

Generally, the multi-satellite formation SAR system mainly has two working modes. The first working mode is that one satellite-borne SAR transmits the radar signal, and more than one other satellite-borne SAR receives the echo signal of the radar signal. The first working mode is called the two-station mode. The satellite transmitting the radar signal is called the primary satellite, and the satellite receiving the echo signal of the radar signal is called the secondary satellite. The second working mode is that all the satellite-borne SARs work independently, that is to say, all the satellite-borne SARs transmit the radar signals separately, and receive the echo signals of the radar signals of other SARs. The second working mode is called the catch-up single-station mode. In the two-station working mode, it is only needed to perform the phase synchronization compensation on the echo signal received by the secondary satellite. In the catch-up single-station mode, it is needed to perform the phase synchronization compensation on the echo signals received by all the satellites.

Here, in the two-station mode, the first SAR may be the satellite-borne SAR of the primary satellite transmitting the radar signal in the multi-satellite formation SAR system, and the second SAR may be the satellite-borne SAR of any secondary satellite receiving the radar signal in the satellite-borne SAR system. In the two-station mode, there are usually more than two secondary satellites, and each secondary satellite is equivalent to a second SAR. In the catch-up mode, the first SAR may be any satellite-borne SAR transmitting the radar signal, and the second SAR may be any satellite-borne SAR receiving the echo signal of the radar signal.

Specifically, the first SAR may directly transmit the first phase synchronization signal to the second SAR, and the first phase synchronization signal is received by the second SAR. Since the first SAR and the second SAR use different crystal oscillators, the azimuth phase error introduced by the crystal oscillator frequency error may exist, and a phase error may be generated between the first receipt signal received by the second SAR and the first phase synchronization signal. After receiving the first receipt signal, the second SAR directly transmits the second phase synchronization signal to the first SAR, and the second phase synchronization signal is received by the first SAR. Since the second SAR and the first SAR use different crystal oscillators, the azimuth phase error introduced by the crystal oscillator frequency error may exist, and a phase error may be generated between the second receipt signal received by the first SAR and the second phase synchronization signal. The first phase synchronization signal and the second phase synchronization signal may be the linear frequency modulation signals.

The first receipt signal and the second receipt signal may be either acquired by the primary satellite or the secondary satellite for subsequent processing, or acquired by the ground station for subsequent processing.

Furthermore, the first phase synchronization signal and the second phase synchronization signal are transmitted in the free time outside of the period of time of transmitting the radar signal and the echo sampling window of the echo signal; and the first receipt signal and the second receipt signal are received in the free time outside of the period of time of transmitting the radar signal and the echo sampling window of the echo signal.

Here, the first SAR and the second SAR may transmit the first phase synchronization signal and the second phase synchronization signal and receive the first receipt signal and the second receipt signal in the free time outside of the period of time of transmitting the radar signal and receiving the echo signal. In such a manner, interruption of normal working of the radar caused by the phase synchronization processing may be prevented, thereby improving the working efficiency of the radar.

Furthermore, the first SAR transmits the first phase synchronization signal in the free time in first PRT, and the second SAR receives the first receipt signal in the free time in the first PRT. The second SAR transmits the second phase synchronization signal in the free time in second PRT, and the first SAR receives the second receipt signal in the free time in the second PRT.

Specifically, there are usually two pieces of free time in one piece of PRT, one of which is the free time between the time of transmitting the radar signal and the echo receiving window, and the other is the free time between the time after the echo receiving window and the end time of this PRT. The transmitting and receiving of the phase synchronization signal may be completed once in the selected free time in two pieces of PRT.

As shown in FIG. 2, in the multi-satellite formation SAR system composed of one primary satellite and three secondary satellites, the primary satellite and the secondary satellites perform the transmitting and receiving of the phase synchronization signal in the free time between the time of transmitting the radar signal and the echo receiving window in the two pieces of PRT. In the PRT1, the primary satellite transmits the first phase synchronization signal to the secondary satellite 1 in the free time, and the secondary satellite 1 completes the receiving of the first phase synchronization signal in the free time. Due to the crystal oscillator frequency error of the primary satellite and the secondary satellite 1, a phase error may be generated between the signal received by the secondary satellite 1 and the first phase synchronization signal, the received signal is the first receipt signal. In the PRT2, the secondary satellite 1 transmits the second phase synchronization signal to the primary satellite in the free time, and the primary satellite receives the second phase synchronization signal in the free time. Due to the crystal oscillator frequency error of the primary satellite and the secondary satellite 1, a phase error may be generated between the signal received by the primary satellite and the second phase synchronization signal, the received signal is the second receipt signal. Here, both the transmitting and receiving of the phase synchronization signal are performed in the free time between the time of transmitting the radar signal and the echo receiving window, or may also be performed in the free time between the time after the echo receiving window and the end time of this PRT. In each subsequent PRT, the primary satellite performs the transmitting and receiving of the phase synchronization signal with the secondary satellite 2 and the secondary satellite 3 in the same way as the secondary satellite 1, so it will not be repeated here.

Furthermore, according to the duration of the free time for transmitting the first phase synchronization signal and the second phase synchronization signal, and the transmission duration of the first phase synchronization signal and the second phase synchronization signal, the maximum value of the pulse width of the first phase synchronization signal and the second phase synchronization signal are determined based on the second preset rule; and according to the preset SNR threshold, the minimum value of the pulse width of the first phase synchronization signal and the second phase synchronization signal are determined based on the third preset rule.

Here, the pulse width is the duration of the first phase synchronization signal or the second phase synchronization signal. The necessary condition that a piece of free time may be used for the transmitting and receiving of the phase synchronization signal is that: the duration of the free time is not less than two pulse widths of the phase synchronization signal plus the transmission duration of the phase synchronization signal in space. So, the second preset rule may be set according to the principle, that is, the necessary condition that a piece of free time can be used to transmit and receive the phase synchronization signal may be that when the free time is fixed, the maximum value of the pulse width may be equal to a half of the difference between the duration of the free time and the transmission duration of the synchronization signal.

The preset SNR threshold is the SNR threshold that the effective signal may be identified by the phase synchronization signal receiving end. Generally, the greater the pulse width of the signal, the higher the energy of the effective signal, and the greater the SNR; so, the phase synchronization signal receiving end may identify the effective signal in the phase synchronization signal only when the pulse width achieves a certain length. In such a manner, the minimum value of the pulse width may be determined according to the preset SNR threshold. The third preset rule may be the corresponding relationship between the preset SNR threshold and the minimum value of the pulse width; the different preset SNR thresholds correspond to the different minimum values of the pulse width. The third preset rule may also set some redundancies, so as to ensure that the minimum value of the pulse width may be identified by the phase synchronization signal receiving end.

Specifically, by taking that the pulse width of the first phase synchronization signal is determined for example, the free time in a piece of PRT is usually determined by the radar signal, that is, after the radar signal is determined, the free time in each PRT is determined. By taking that the transmitting and receiving of the synchronization signal are performed once in two pieces of adjacent PRT respectively for example, the above-mentioned two pieces of free time which are called the first free duration and the second free duration are in each PRT. The maximum value of the first free duration and the second free duration in the former PRT of the two pieces of adjacent PRT is determined to be the first threshold; the maximum value of the first free duration and the second free duration in the latter PRT of the two pieces of adjacent PRT is determined to be the second threshold; the minimum value of the first threshold and the second threshold is determined to be the third threshold; and the transmission duration of the first phase synchronization signal is determined according to the distance between the first SAR and the second SAR.

The maximum value of the pulse width is determined according to the third threshold and the transmission duration of the first phase synchronization signal; the minimum value of the pulse width is determined according to the preset SNR of the phase synchronization signal; and the pulse width of the first phase synchronization signal is determined according to the maximum value and minimum value of the pulse width.

The pulse width of the first phase synchronization signal may be determined according to the maximum value and minimum value of the pulse widths in multiple implementation manners; for example, intermediate values between the minimum value and the maximum value may be determined to be the pulse width, and the numerical value between the minimum value and the maximum value may also be randomly selected and determined to be the pulse width. Of course, the numerical value, input by the operator, between the minimum and maximum value may also be determined to be the pulse width.

Furthermore, carrier frequencies of the first phase synchronization signal and the second phase synchronization signal are as same as the carrier frequency of the radar signal.

Each phase synchronization signal in the SAR system is the linear frequency modulation signal, and the carrier frequency of each phase synchronization signal is as same as the carrier frequency of the radar signal. So, during the system design, the setting of the transceiver of the phase synchronization signal may be simplified, thereby reducing complexity in the system design. In the meanwhile, since the carrier frequency of each phase synchronization signal is as same as the carrier frequency of the radar signal, the phase compensation is performed without transforming the synchronization data in proportion to the radar frequency, thereby making the compensation result more accurate.

Furthermore, the first phase synchronization signal and the second phase synchronization signal are the same signal; so, the calculation of the pulse widths of the first phase synchronization signal and the second phase synchronization signal may be performed more conveniently, thereby simplifying the calculation work.

After the above steps are completed, time points of transmitting and receiving the first phase synchronization signal and the second phase synchronization signal are determined, namely the free time of the transmitting and receiving performed by using the radar signal; the pulse width and the carrier frequencies of the first phase synchronization signal and the second phase synchronization signal are determined; so, the first phase synchronization signal and second phase synchronization signal are determined completely.

At S102, a peak phase difference between a peak phase of the first receipt signal and a peak phase of the second receipt signal is determined, and compensation phase is determined using the first preset rule according to the peak phase difference.

Here, the peak phase difference between the peak phase of the first receipt signal and the peak phase of the second receipt signal may be determined by the primary satellite, the secondary satellite or the ground station which acquires the first receipt signal and the second receipt signal; and the compensation phase is determined using the preset rule according to the peak phase difference. The first preset rule may be determined according to the first phase synchronization signal and the second phase synchronization signal. When the carrier frequencies of the first phase synchronization signal and the second phase synchronization signal are different from the carrier frequency of the radar signal, the frequency conversion is required.

Furthermore, the pulse compression is performed on the first receipt signal and the second receipt signal respectively, and the peak phases corresponding to the first receipt signal and the second receipt signal are acquired; the subtraction is performed on the peak phases corresponding to the first receipt signal and the second receipt signal to obtain the peak phase difference; and a half of the peak phase difference is determined to be the compensation phase.

Here, the pulse compression may be performed on the first receipt signal and the second receipt signal respectively; the peak phases of the first receipt signal and the second receipt signal are extracted from the results of performing the pulse compression on the first receipt signal and the second receipt signal respectively; and the difference between the two peak phases is determined, namely the peak phase difference.

The first receipt signal and the second receipt signal respectively go through a process of transmitting and receiving and acquiring signal, and the phase errors may be exist respectively in the process of transmitting and receiving, so a half of the peak phase difference may be determined to be the compensation phase when the first phase synchronization signal and the second phase synchronization signal with the same carrier frequency as the radar signal are adopted.

In practical applications, in the satellite-borne SAR in the two-station mode, the compensation phase corresponding to each secondary satellite may be determined; in the satellite-borne SAR in the catch-up mode, the compensation phase may be determined for the two satellite-borne SARs transmitting and receiving the radar signal each other.

At S103, according to the compensation phase, the phase compensation is performed on the echo signal received by the second SAR, herein the echo signal is generated by the radar signal transmitted by the first SAR.

Here, in the satellite-borne SAR in the two-station mode, the primary satellite only transmits the radar signal, so the phase compensation may be performed on the echo signal received by each secondary satellite according to the compensation phase; in the satellite-borne SAR in the catch-up mode, each satellite receives the echo signal, and the phase compensation may be performed on the echo signal according to the compensation phase corresponding to the radar signal.

The phase compensation may be performed in the satellite of the satellite-borne SAR or in the ground station.

The embodiments of the disclosure also provides an information processing device, which includes a processor, a memory, and an executable program which is stored on the memory and may be executed by the processor. When executed by the processor, the executable program implements the steps of the phase synchronization method. As shown in FIG. 1, the phase synchronization method includes the following steps.

At S101, a second SAR receives a first phase synchronization signal transmitted by a first SAR to obtain a first receipt signal; the first SAR receives the second phase synchronization signal transmitted by the second SAR to obtain a second receipt signal.

Generally, the multi-satellite formation SAR system mainly has two working modes. The first working mode is that one satellite-borne SAR transmits the radar signal, and more than one other satellite-borne SAR receives the echo signal of the radar signal. The first working mode is called the two-station mode. The satellite transmitting the radar signal is called the primary satellite, and the satellite receiving the echo signal of the radar signal is called the secondary satellite. The second working mode is that all the satellite-borne SARs work independently, that is to say, all the satellite-borne SARs transmit the radar signals separately, and receive the echo signals of the radar signals of other SARs. The second working mode is called the catch-up single-station mode. In the two-station working mode, it is only needed to perform the phase synchronization compensation on the echo signal received by the secondary satellite. In the catch-up single-station mode, it is needed to perform the phase synchronization compensation on the echo signals received by all the satellites.

Here, in the two-station mode, the first SAR may be the satellite-borne SAR of the primary satellite transmitting the radar signal in the multi-satellite formation SAR system, and the second SAR may be the satellite-borne SAR of any secondary satellite receiving the radar signal in the satellite-borne SAR system. In the two-station mode, there are usually more than two secondary satellites, and each secondary satellite is equivalent to a second SAR. In the catch-up mode, the first SAR may be any satellite-borne SAR transmitting the radar signal, and the second SAR may be any satellite-borne SAR receiving the echo signal of the radar signal.

Specifically, the first SAR may directly transmit the first phase synchronization signal to the second SAR, and the first phase synchronization signal is received by the second SAR. Since the first SAR and the second SAR use different crystal oscillators, the azimuth phase error introduced by the crystal oscillator frequency error may exist, and a phase error may be generated between the first receipt signal received by the second SAR and the first phase synchronization signal. After receiving the first receipt signal, the second SAR directly transmits the second phase synchronization signal to the first SAR, and the second phase synchronization signal is received by the first SAR. Since the second SAR and the first SAR use different crystal oscillators, the azimuth phase error introduced by the crystal oscillator frequency error may exist, and a phase error may be generated between the second receipt signal received by the first SAR and the second phase synchronization signal. The first phase synchronization signal and the second phase synchronization signal may be the linear frequency modulation signals.

The first receipt signal and the second receipt signal may be either acquired by the primary satellite or the secondary satellite for subsequent processing, or acquired by the ground station for subsequent processing.

Furthermore, the first phase synchronization signal and the second phase synchronization signal are transmitted in the free time outside of the period of time of transmitting the radar signal and the echo sampling window of the echo signal; and the first receipt signal and the second receipt signal are received in the free time outside of the period of time of transmitting the radar signal and the echo sampling window of the echo signal.

Here, the first SAR and the second SAR may transmit the first phase synchronization signal and the second phase synchronization signal and receive the first receipt signal and the second receipt signal in the free time outside of the period of time of transmitting the radar signal and receiving the echo signal. In such a manner, interruption of normal working of the radar caused by the phase synchronization processing may be prevented, thereby improving the working efficiency of the radar.

Furthermore, the first SAR transmits the first phase synchronization signal in the free time in first PRT, and the second SAR receives the first receipt signal in the free time in the first PRT. The second SAR transmits the second phase synchronization signal in the free time in second PRT, and the first SAR receives the second receipt signal in the free time in the second PRT.

Specifically, there are usually two pieces of free time in one piece of PRT, one of which is the free time between the time of transmitting the radar signal and the echo receiving window, and the other is the free time between the time after the echo receiving window and the end time of this PRT. The transmitting and receiving of the phase synchronization signal may be completed once in the selected free time in two pieces of PRT.

As shown in FIG. 2, in the multi-satellite formation SAR system composed of one primary satellite and three secondary satellites, the primary satellite and the secondary satellites perform the transmitting and receiving of the phase synchronization signal in the free time between the time of transmitting the radar signal and the echo receiving window in the two pieces of PRT. In the PRT1, the primary satellite transmits the first phase synchronization signal to the secondary satellite 1 in the free time, and the secondary satellite 1 completes the receiving of the first phase synchronization signal in the free time. Due to the crystal oscillator frequency error of the primary satellite and the secondary satellite 1, a phase error may be generated between the signal received by the secondary satellite 1 and the first phase synchronization signal, that is, the received signal is the first receipt signal. In the PRT2, the secondary satellite 1 transmits the second phase synchronization signal to the primary satellite in the free time, and the primary satellite receives the second phase synchronization signal in the free time. Due to the crystal oscillator frequency error of the primary satellite and the secondary satellite 1, a phase error may be generated between the signal received by the primary satellite and the second phase synchronization signal, the received signal is the second receipt signal. Here, both the transmitting and receiving of the phase synchronization signal are performed in the free time between the time of transmitting the radar signal and the echo receiving window, or may also be performed in the free time between the time after the echo receiving window and the end time of this PRT. In each subsequent PRT, the primary satellite performs the transmitting and receiving of the phase synchronization signal with the secondary satellite 2 and the secondary satellite 3 in the same way as the secondary satellite 1, so it will not be repeated here.

Furthermore, according to the duration of the free time for transmitting the first phase synchronization signal and the second phase synchronization signal, and the transmission duration of the first phase synchronization signal and the second phase synchronization signal, the maximum values of the pulse widths of the first phase synchronization signal and the second phase synchronization signal are determined based on the second preset rule; and according to the preset SNR threshold, the minimum values of the pulse widths of the first phase synchronization signal and the second phase synchronization signal are determined based on the third preset rule.

Here, the pulse width is the duration of the first phase synchronization signal or the second phase synchronization signal. The necessary condition that a piece of free time may be used for the transmitting and receiving of the phase synchronization signal is that: the duration of the free time is not less than two pulse widths of the phase synchronization signal plus the transmission duration of the phase synchronization signal in space. So, the second preset rule may be set according to the principle, that is, the necessary condition that a piece of free time can be used to transmit and receive the phase synchronization signal may be that when the free time is fixed, the maximum value of the pulse width may be equal to a half of the difference between the duration of the free time and the transmission duration of the synchronization signal.

The preset SNR threshold is the SNR threshold that the effective signal may be identified by the phase synchronization signal receiving end. Generally, the greater the pulse width of the signal, the higher the energy of the effective signal, and the greater the SNR; so, the phase synchronization signal receiving end may identify the effective signal in the phase synchronization signal only when the pulse width achieves a certain length. In such a manner, the minimum value of the pulse width may be determined according to the preset SNR threshold. The third preset rule may be the corresponding relationship between the preset SNR threshold and the minimum value of the pulse width; the different preset SNR thresholds correspond to the different minimum values of the pulse width. The third preset rule may also set some redundancies, so as to ensure that the minimum value of the pulse width may be identified by the phase synchronization signal receiving end.

Specifically, by taking that the pulse width of the first phase synchronization signal is determined for example, the free time in a piece of PRT is usually determined by the radar signal, that is, after the radar signal is determined, the free time in each PRT is determined. By taking that the transmitting and receiving of the synchronization signal are performed once in two pieces of adjacent PRT respectively for example, the above-mentioned two pieces of free time which are called the first free duration and the second free duration are in each PRT. The maximum value of the first free duration and the second free duration in the former PRT in the two pieces of adjacent PRT is determined to be the first threshold; the maximum value of the first free duration and the second free duration in the latter PRT in the two pieces of adjacent PRT is determined to be the second threshold; the minimum value of the first threshold and the second threshold is determined to be the third threshold; and the transmission duration of the first phase synchronization signal is determined according to the distance between the first SAR and the second SAR.

The maximum value of the pulse width is determined according to the third threshold and the transmission duration of the first phase synchronization signal; the minimum value of the pulse width is determined according to the preset SNR of the phase synchronization signal; and the pulse width of the first phase synchronization signal is determined according to the maximum value and minimum value of the pulse width.

The pulse width of the first phase synchronization signal may be determined according to the maximum value and minimum value of the pulse widths in multiple implementation manners; for example, intermediate values between the minimum value and the maximum value may be determined to be the pulse width, and a numerical value between the minimum value and the maximum value may also be randomly selected and determined to be the pulse width. Of course, the numerical value, input by the operator, between the minimum and maximum value may also be determined to be the pulse width.

Furthermore, carrier frequencies of the first phase synchronization signal and the second phase synchronization signal are as same as the carrier frequency of the radar signal.

Each phase synchronization signal in the SAR system is the linear frequency modulation signal, and the carrier frequency of each phase synchronization signal is as same as the carrier frequency of the radar signal. So, during the system design, the setting of the transceiver of the phase synchronization signal may be simplified, thereby reducing complexity in the system design. In the meanwhile, since the carrier frequency of each phase synchronization signal is as same as the carrier frequency of the radar signal, the phase compensation is performed without transforming the synchronization data in proportion to the radar frequency, thereby making the compensation result more accurate.

Furthermore, the first phase synchronization signal and the second phase synchronization signal are the same signal; so, the calculation of the pulse widths of the first phase synchronization signal and the second phase synchronization signal may be performed more conveniently, thereby simplifying the calculation work.

After the above steps are completed, time points of transmitting and receiving the first phase synchronization signal and the second phase synchronization signal are determined, namely the free time based on the transmitting and receiving of the radar signal; the pulse width and the carrier frequencies of the first phase synchronization signal and the second phase synchronization signal are determined; so, the first phase synchronization signal and second phase synchronization signal are determined completely.

At S102, a peak phase difference between a peak phase of the first receipt signal and a peak phase of the second receipt signal is determined, and determine the compensation phase using the first preset rule according to the peak phase difference.

Here, the peak phase difference between the peak phase of the first receipt signal and the peak phase of the second receipt signal may be determined by the primary satellite, the secondary satellite or the ground station which acquires the first receipt signal and the second receipt signal; and the compensation phase is determined using the preset rule according to the peak phase difference. The first preset rule may be determined according to the first phase synchronization signal and the second phase synchronization signal. When the carrier frequencies of the first phase synchronization signal and the second phase synchronization signal are different from the carrier frequency of the radar signal, the frequency conversion is required.

Furthermore, the pulse compression is performed on the first receipt signal and the second receipt signal respectively, and the peak phases corresponding to the first receipt signal and the second receipt signal are acquired; the subtraction is performed on the peak phases corresponding to the first receipt signal and the second receipt signal to obtain the peak phase difference; and a half of the peak phase difference is determined to be the compensation phase.

Here, the pulse compression may be performed on the first receipt signal and the second receipt signal respectively; the peak phases of the first receipt signal and the second receipt signal are extracted from the results of performing the pulse compression on the first receipt signal and the second receipt signal respectively; and the difference between the two peak phases is determined, namely the peak phase difference.

The first receipt signal and the second receipt signal respectively go through a process of transmitting and receiving and acquiring signal, and the phase errors may be exist respectively in the process of transmitting and receiving, so a half of the peak phase difference may be determined to be the compensation phase when the first phase synchronization signal and the second phase synchronization signal with the same carrier frequency as the radar signal are adopted.

In practical applications, in the satellite-borne SAR in the two-station mode, the compensation phase corresponding to each secondary satellite may be determined; in the satellite-borne SAR in the catch-up mode, the compensation phase may be determined for the two satellite-borne SARs transmitting and receiving the radar signal each other.

At S103, according to the compensation phase, the phase compensation is performed on the echo signal received by the second SAR, herein the echo signal is generated by the radar signal transmitted by the first SAR.

Here, in the satellite-borne SAR in the two-station mode, the primary satellite only transmits the radar signal, so the phase compensation may be performed on the echo signal received by each secondary satellite according to the compensation phase; in the satellite-borne SAR in the catch-up mode, each satellite receives the echo signal, and the phase compensation may be performed on the echo signal according to the compensation phase corresponding to the radar signal.

The phase compensation may be performed in the satellite of the satellite-borne SAR or in the ground station.

The above is only the preferred embodiments of the disclosure and not intended to limit the protection scope of the disclosure; any modifications, equivalent replacements and improvements within the spirit and principle of the disclosure shall fall within the protection scope of the disclosure.

## Claims

1. A phase synchronization method, comprising:
receiving (S101), by a second Synthetic Aperture Radar, SAR, a first phase synchronization signal transmitted by a first SAR to obtain a first receipt signal; receiving, by the first SAR, a second phase synchronization signal transmitted by the second SAR to obtain a second receipt signal;
determining (S102) a peak phase difference between a peak phase of the first receipt signal and a peak phase of the second receipt signal, and determining a compensation phase using a first preset rule according to the peak phase difference; and
performing (S103) phase compensation on an echo signal received by the second SAR according to the compensation phase, wherein the echo signal is generated from a radar signal transmitted by the first SAR.

2. The method of claim 1, wherein
the first phase synchronization signal and the second phase synchronization signal are transmitted in free time outside of a period of time of transmitting the radar signal and an echo sampling window of the echo signal; and
the first receipt signal and the second receipt signal are received in the free time outside of the period of time of transmitting the radar signal and the echo sampling window of the echo signal.

3. The method of claim 2, wherein in the free time outside of the period of time of transmitting the radar signal and the echo sampling window of the echo signal, performing the transmitting of the first phase synchronization signal and the second phase synchronization signal and the receiving of the first receipt signal and the second receipt signal comprises:
transmitting, by the first SAR, the first phase synchronization signal in the free time in first Pulse Recurrence Time, PRT and receiving, by the second SAR, the first receipt signal in the free time in the first PRT; and
transmitting, by the second SAR, the second phase synchronization signal in the free time in second PRT, and receiving, by the first SAR, the second receipt signal in the free time in the second PRT.

4. The method of claim 2, further comprising:
determining maximum values of pulse widths of the first phase synchronization signal and the second phase synchronization signal based on a second preset rule according to duration of the free time for transmitting the first phase synchronization signal and the second phase synchronization signal, and transmission duration of the first phase synchronization signal and the second phase synchronization signal; and
determining minimum values of the pulse widths of the first phase synchronization signal and the second phase synchronization signal based on a third preset rule according to a preset Signal to Noise Ratio, SNR, threshold.

5. The method of any one of claims 1 to 4, wherein
carrier frequencies of the first phase synchronization signal and the second phase synchronization signal are as same as the carrier frequency of the radar signal.

6. The method of any one of claim 4, wherein
the third preset rule is a corresponding relationship between the preset SNR threshold and the minimum values of the pulse widths.

7. A phase synchronization device, comprising: an acquiring module (61), a determining module (62), and a compensating module (63); wherein
the acquiring module (61) is configured to acquire a first phase synchronization signal which is transmitted by a first Synthetic Aperture Radar, SAR and received by a second SAR to obtain a first receipt signal and a second phase synchronization signal which is transmitted by the second SAR and received by the first SAR to obtain a second receipt signal;
the determining module (62) is configured to determine a peak phase difference between a peak phase of the first receipt signal and a peak phase of the second receipt signal, and determine a compensation phase using a first preset rule according to the peak phase difference; and
the compensating module (63) is configured to perform phase compensation on an echo signal received by the second SAR according to the compensation phase, wherein the echo signal is generated from a radar signal transmitted by the first SAR.

8. The device of claim 7, wherein the acquiring module (61) is specifically configured to:
transmit the first phase synchronization signal and the second phase synchronization signal in free time outside of a period of time of transmitting the radar signal and an echo sampling window of the echo signal; and
receive the first receipt signal and the second receipt signal in the free time outside of the period of time of transmitting the radar signal and the echo sampling window of the echo signal.

9. The device of claim 8, wherein the first receipt signal is the first phase synchronization signal which is transmitted by the first SAR in the free time in first Pulse Recurrence Time, PRT and received by the second SAR in the free time in the first PRT;
the second receipt signal is the second phase synchronization signal which is transmitted by the second SAR in the free time in second PRT and received by the first SAR in the free time in the second PRT.

10. The device of claim 8, further comprising a setting module (64), the setting module (64) is configured to:
determine maximum values of pulse widths of the first phase synchronization signal and the second phase synchronization signal based on a second preset rule according to duration of the free time for transmitting the first phase synchronization signal and the second phase synchronization signal, and the transmission duration of the first phase synchronization signal and the second phase synchronization signal; and
determine minimum values of the pulse widths of the first phase synchronization signal and the second phase synchronization signal based on a third preset rule according to a preset Signal to Noise Ratio, SNR, threshold.

11. The device of any one of claims 7 to 10, wherein
carrier frequencies of the first phase synchronization signal and the second phase synchronization signal are as same as the carrier frequency of the radar signal.

12. The device of any one of claim 10, wherein
the third preset rule is a corresponding relationship between the preset SNR threshold and the minimum values of the pulse widths.

13. A storage medium storing executable program which, when executed by a processor, implements steps of a phase synchronization method according to any one of claims 1 to 6.

14. An information processing device, comprising a processor, a memory, and an executable program which is stored on the memory and may be executed by the processor, wherein the executable program, when executed by the processor, implements steps of a phase synchronization method according to any one of claims 1 to 6.
